# EUROPEAN PATENT APPLICATION

(11) **EP 3 181 483 A1**
(43) Date of publication of application: **21.06.2017**
(21) Application number: 15200454.5
(22) Date of filing: 16.12.2015
(51) Int. Cl.: B65D 85/52

(54) **PLANT TRANSPORTATION DEVICE AND KIT OF PARTS**

(71) Applicant: InFarm - Indoor Urban Farming GmbH, 10999 Berlin (DE)
(72) Inventor: Galonska, Erez, 10999 Berlin (DE); Galonska, Guy, 10999 Berlin (DE)
(74) Representative: adares Patent- und Rechtsanwälte Reininger & Partner

(57) **Abstract**

The invention relates to a plant transportation device comprising: a container (1) with a receptacle (10) and an opening (11) for positioning roots of a soilless living plant through the opening (11) into the receptacle (10), the receptacle (10) having a soilless medium (12) that is adapted to provide humidity and/ or nutrients to the roots of the soilless living plant. According to the invention it is provided that the opening (11) of the container (1) comprises a mechanically acting locking structure (110) arranged and adapted to create a mechanically fixed engagement between the container (1) and a plant adaptor (2) that matches the locking structure (110). Further, the invention relates to a kit of parts comprising the plant transportation device and a plant adaptor (2), wherein the plant adaptor (2) has a plant opening (20) being surrounded by a peripheral structure (22) that comprises a plant adaptor locking structure (21).

## Description

The invention is related to a plant transportation device and a kit of parts comprising the plant transportation device. The plant transportation device comprises a container with a receptacle and an opening for positioning roots of a soilless living plant through the opening into the receptacle. The receptacle has a soilless medium that is adapted to provide humidity and/ or nutrients to the roots of the soilless living plant. Such a container is known from WO2004/066718A1.

However, there is a problem that the living plant needs correct conditions during transportation. Otherwise the living plant can suffer or even die. On the one hand, there is a problem to provide for the living plant conditions of suitable moisture. If the moisture content in the transportation device is too high or too low, the living plant can be damaged and/ or the living plant can be in poor health. Not only the living plant can suffer in its transportation device but also a customer in a super market or the like would be hesitant or will not buy a living plant in a plant transportation device looking badly. On the other hand, there is a problem to keep the living plant mechanically stable during transportation. During transportation the plant transportation device can tip over or the plant itself put into the transportation device can tip over, leading to a damage of the plant and/ or a loose of the plant from the plant transportation device.

The invention has the object to solve the problem to provide suitable transport conditions for a living plant.

This obj ect is solved by the plant transportation device according to claim 1 and a kit of parts according to claim 10.

According to the invention, the opening of the container comprises a mechanically acting locking structure arranged and adapted to create a mechanically fixed engagement between the container and a plant adaptor that matches the locking structure. The container providing the receptacle may be made from a large number of different materials in particular polymers, glass and natural materials. The container may be rigid or flexible depending on the chosen material and its thickness.

Thus, the plant transportation device allows a safer transportation of a living plant being arranged mechanically safe in the plant adaptor, i.e. without damaging the living plant, as well as excellent transport conditions for the living plant. The plant adaptor cannot loosen from the container during transportation of the living plant, even if the plant transportation device tipped over.

The term "soilless living plant" means that in particular the roots of the living plant are not contacted by soil particles. Preferably, living plants that have been grown in hydroponic or aeroponic growing systems are used. The soilless medium is adapted to provide humidity and/ or nutrients to the roots of the soilless living plant. The term "soilless medium" is to be understood to mean a medium that does not comprise soil. However, the soilless medium may also contain an organic medium like natural fibers and/ or processed bark or wood. The term "plant transportation device" is to be understood to mean a device which is suitable for plant transportation as well as for allowing the living plant to stay and live for some time (several days) in the device. All of the direction and position information refer to the operational condition of the plant transportation device.

The living plant may be in all conditions starting from a seedling up to a fully grown plant. Preferably, the plant transportation device is adapted to allow further growth of the plant.

The soilless medium is adapted to provide humidity and/ or nutrients to the roots of the soilless living plant. However, this can be an inherent feature of the medium or alternatively the medium can be reacted with aqueous slurry of nutritive aggregate and/ or another adj uvant(s), e.g., a fungicide and/ or pH adj usting agent. According to a preferred embodiment, the soilless medium is selected from a group consisting of a gel, a liquid and a sponge-like structure. Preferably, the gel is a hydrogel, i.e. a water-insoluble hydrophilic material such as a polymer containing water. For example, the gel can be agar, silica gel or sesbania gum powder. In another preferred embodiment, the soilless medium is a liquid, more preferably a thixotropic liquid. In another preferred embodiment, the soilless medium is sponge-like structure, more preferably, a sponge of dry wood.

Preferably, the soilless medium is arranged inside the receptacle in a separate medium compartment separated from adjacent areas of the receptacle by a compartment wall. This embodiment provides a protection of the soilless medium from environmental conditions. This may include reactions with oxygen or other gases.

According to a preferred embodiment, the container comprises an opening device that is adapted and arranged to penetrate the compartment wall when a plant adaptor is mechanically fixed to the container by the mechanically acting locking structure. Alternatively or additionally, the opening device is adapted and arranged to remove or to rip the compartment wall when a plant adaptor is mechanically fixed to the container by the mechanically acting locking structure. Thus, it is ensured that the roots of the living plant get into contact with the soilless medium during transportation. The opening device can be, e.g., a needle or a blade. Preferably, the opening device is arranged and adapted to be movable by the plant adaptor during fixation of the plant adaptor to the container. For this purpose the movement of the opening device may be subject to positive control.

In a preferred embodiment, the opening with the mechanically acting locking structure is the only orifice of the receptacle. So, even when the plant transportation device tips over during transport of the plant, an outpouring of an in particular liquid soilless medium is prevented.

In another preferred embodiment, adjacent to the opening further orifice areas are arranged at an upper end of the container thus providing a closed container apart from the opening. This embodiment allows an air circulation in the container, even when the plant adaptor is locked to it.

Preferably, the opening and its mechanically acting locking structure are arranged at an upper end of the container, wherein the container extends adjacently to the opening and downwards from the opening to form the receptacle. Thereby, the plant adaptor can be locked to the container so that the roots of the living plant can extend downwards from the openi ng into the receptacle and are protected from the environment by the receptacle.

According to a preferred embodiment, the mechanically acting locking structure is arranged and adapted to provide a mechanical screwing and/or clamping and/or clip-lock-mechanism to create the mechanically fixed engagement between the container and the plant adaptor. When the mechanically acting locking structure is arranged and adapted to provide a mechanical screwing mechanism, the mechanically acting locking structure can have tapering walls. When the mechanically acting locking structure is arranged and adapted to provide a clamping mechanism, it can comprise a wall having protrusions and/ or recesses. When the mechanically acting locking structure is arranged and adapted to provide a clip-lock-mechanism, the mechanically acting locking structure can comprise engaging means, preferably self-locking means. Moreover, a bayonet catch is another option for the embodiment.

Preferably, the container comprises at its outer side a further mechanically acting locking structure arranged and adapted to create a mechanically fixed engagement between the container and a cover that matches the locking further mechanically acting structure. Preferably, the further mechanically acting locking structure is arranged at the side walls at an upper end of the container and/ or the container's upper wall surrounding the opening. Preferably, the further mechanically acting locking structure is arranged and adapted to provide a mechanical screwing and/or clamping and/or clip-lock-mechanism to create the mechanically fixed engagement between the container and the cover. The mechanical screwing and/ or clamping and/or clip-lock-mechanism can be formed in the same manner as described above in relation to the mechanically acting locking structure arranged and adapted to lock the plant adaptor. An arrangement of two locking structures in combination with a cover allows protection of the roots as well as of plant stem and leaves of the living plant.

Furthermore, the invention relates a kit of parts comprising the plant transportation device according to one or more of the above-mentioned embodiments and a plant adaptor. The plant adaptor has a plant opening being surrounded by a peripheral structure that comprises a mechanically acting plant adaptor locking structure. The plant adaptor locking structure is formed complementary to the mechanically acting locking structure of the container to provide a secure locking structure, when the plant adaptor is assembled to the container. The plant adapter is preferably designed and adapted to contain a seedling of a living plant in a hydroponic or aeroponic plant growing system. The plant adapter is used to handle the living plant both in the plant growing system and in the container. If a hydroponically or aeroponically grown plant is harvested it is removed from the plant growing system by moving the plant adapter. This movement of the living plant may be performed manually or automatically e.g. by use of a robotic arm. In both scenarios the same plant adapter is then used as a part of the kit of parts to attach the living plant to the container of the plant transportation device of the kit of parts. For the movement of the plant adapter specific manipulation structures are provided by the plant adapter to allow the movement of the living plant from the growing system to the container of the plant transportation device.

In a preferred embodiment, the peripheral structure comprises at least one identification section that shows an absorption coefficient for infrared light being at least 10times higher, preferably at least 50times higher and more preferably at least 100times higher compared to sections of the peripheral structure adjacent to the identification section. In an alternatively preferred embodiment, the peripheral structure comprises at least one identification section that shows a reflection coefficient for infrared light being at least 100times higher, preferably at least 1.000times higher and more preferably at least 10.000times higher compared to sections of the peripheral structure adjacent to the identification section. Infrared light is penetrating plant leaves easily. Thereby, an infrared camera can visualize the absorption and/ or reflection properties of a plant adapter that is densely covered by plant leaves if regarded from above.

Alternatively or in combination it is preferred that the peripheral structure comprises at least one color identification section. An advantage of the color identification section is that it is visible to the naked eye. All of the embodiments showing specific infrared properties and/ or visible color information allow an easier identification of the specific living plant.

Preferably, the kit of parts further comprises a cover. The cover forms a cup-shaped hood that comprises a cover locking structure. The cover locking structure matches with the further mechanically acting locking structure of the container. The cover allows a secure protection of the plant stem and leaves during transport of the living plant when assembled with the container assembled with the plant adaptor having a living plant. Preferably, the cover is transparent and made of a polymer material. Thereby, conditions of the living plant and its current state remain visible to the naked eye.

Several embodiments of the plant transportation device are shown in the figures and are described in the following.
- Figure 1: shows a schematic cross-sectional view of a plant transportation device according to a first embodiment;
- Figure 2: shows a schematic cross-sectional view of a plant transportation device according to a second embodiment;
- Figure 3: shows a schematic cross-sectional view of a plant transportation device according to a third embodiment;
- Figure 4: shows a schematic cross-sectional view of a first embodiment of a plant adaptor;
- Figure 5: shows a schematic cross-sectional view of a second embodiment of a plant adaptor;
- Figure 6: shows a schematic plan view of the plant adaptor shown in Figure 4 and figure 5; and
- Figure 7: shows a schematic cross-sectional view of a cover.

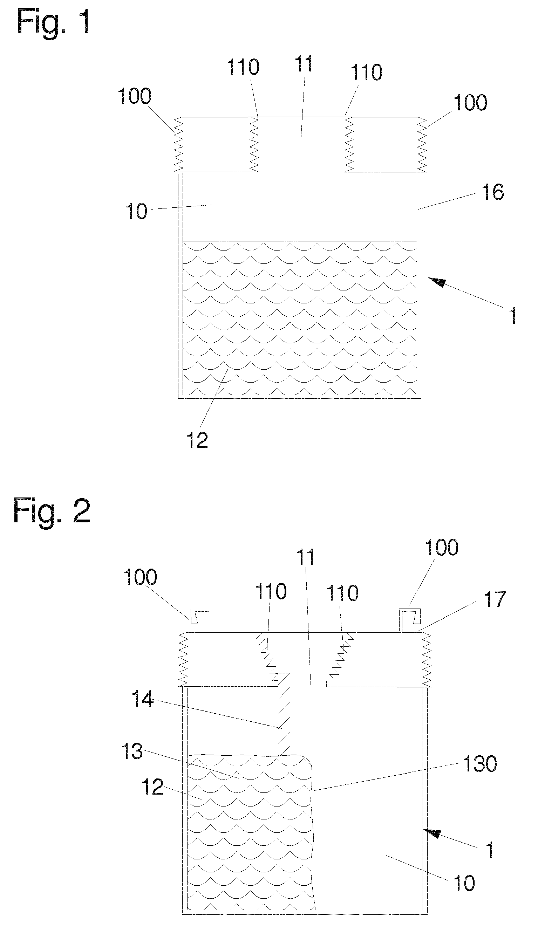

Figure 1 shows a schematic cross-sectional view of a plant transportation device according to a first embodiment. The plant transportation device comprises a container 1 with a receptacle 10 and an opening 11 for positioning roots of a soilless living plant (not shown) through the opening 11 into the receptacle 10. The receptacle 10 has a soilless medium 12 that is adapted to provide humidity and/ or nutrients to the roots of the soilless living plant. The container 1 comprises in the opening 11 a mechanically acting locking structure 110 arranged and adapted to create a mechanically fixed engagement between the container 1 and a plant adaptor 2 (not shown) that matches the locking structure 110. For this embodiment of the container 1 the mechanically acting locking structure 110 is formed as a thread. Furthermore, the container 1 has at its side walls 16 of the receptacle 10 a further mechanically acting locking structure 100 formed as an external thread and arranged and adapted to create a mechanically fixed engagement between the container 1 and a cover 3 (not shown) that matches the further locking structure 100. The further locking structure 100 is arranged at the outer side of the side walls 16 of the receptacle 10 at an upper end of the container 1.

Figure 2 shows a schematic cross-sectional view of a plant transportation device according to a second embodiment. The plant transportation device corresponds to the plant transportation device of Fig. 1 with the difference that
- the mechanically acting locking structure 110 shows an internal thread having tapering walls,
- the mechanically acting further locking structure 100 comprises clip-lock-mechanism at the outer side of upper wall 17 of the receptacle 10,
- the soilless medium 12 is arranged inside the receptacle 10 in a separate medium compartment 13 separated from adjacent areas of the receptacle by a compartment wall 130, and that
- the container 1 comprises an opening device 14 that is adapted and arranged to penetrate and/ or to remove or to rip the compartment wall 130 when a plant adaptor (not shown) is mechanically fixed to the container 1 by the mechanically acting locking structure 110. The opening device 14 is subject to positive control by the movement of the plant adaptor being attached to the mechanically acting locking structures 110 of the container 1.

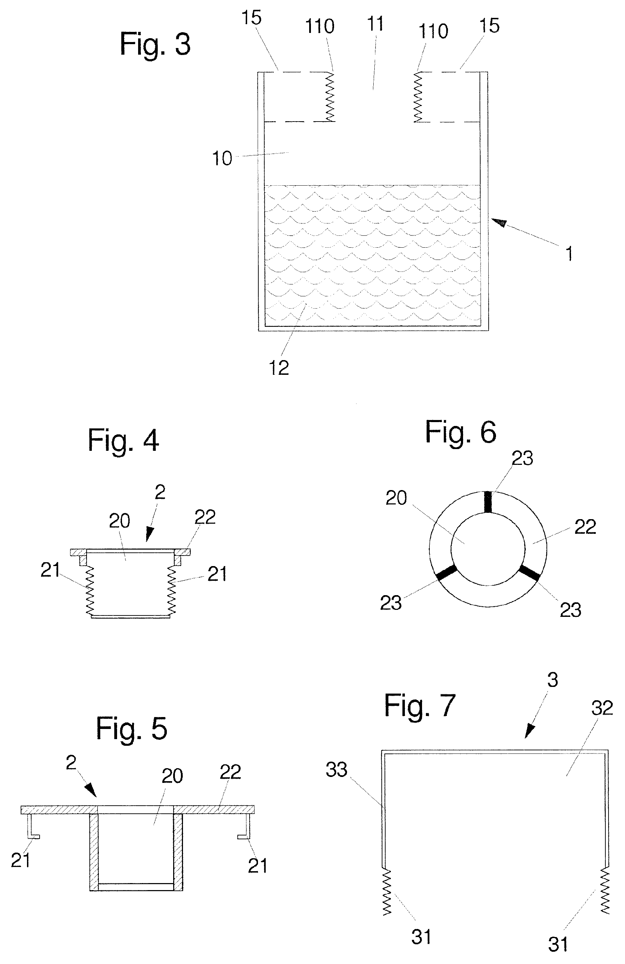

Figure 3 shows a schematic cross-sectional view of a plant transportation device according to a third embodiment. The plant transportation device shown in Fig. 3 corresponds to the plant transportation device shown in Fig. 1 with the difference that adjacent to the opening 11 further orifice areas 15 are arranged at an upper end of the container 1 thus providing a closed container 1 apart from the opening 11 and that it does not show any further mechanically acting locking structure.

Figure 4 shows a schematic cross-sectional view of first embodiment of a plant adaptor. The plant adaptor 2 has a plant opening 20 being surrounded by a peripheral structure 22 that comprises a plant adaptor locking structure 21 formed as a thread. The plant adaptor locking structure 21 is adapted to match the locking structure 110 of the container 1 as shown in Fig. 1. Together with a matching container 1 the plant adaptor 2 forms a kit of parts for the transport of a living plant.

Figure 5 shows a schematic cross-sectional view of second embodiment of a plant adaptor. The plant adaptor 2 has a plant opening 20 being surrounded by a peripheral structure 22 that comprises a plant adaptor locking structure 21. Unlike the first embodiment of the plant adapter the plant adaptor locking structure 21 is formed with a clip-lock mechanism that is adapted to match the clip-lock mechanism 100 shown on top of the container in Fig. 2.

Figure 6 shows a schematic plan view of the plant adaptor shown in Figure 4 or 5. In plan view the plant adaptor 2 has a ring-shaped appearance. The peripheral structure 22 of the plant adaptor 2 comprises identification sections 23. The identification sections 23 show an absorption coefficient or a reflection coefficient for infrared light being 10times higher compared to sections of the peripheral structure adjacent to the identification sections 23. Alternatively and not shown in Fig. 4, the peripheral structure 22 comprises at least one color identification. This color identification may be formed in a section 23 only or the whole peripheral structure is showing a specific color and/or pattern.

Figure 7 shows a schematic cross-sectional view of a cover 3. The cover 3 forms a cup-shaped hood 32 having side walls 33. At the inner side of the side walls 33 a cover locking structure 31 is arranged and adapted to create a mechanically fixed engagement between the container 1 as shown in Fig. 1 and the cover 3 by matching the further mechanically acting locking structure 100. These two locking structures 100, 31 may be matching threads or clip-lock mechanisms.

### List of reference numbers:

- 1: container
- 10: receptacle
- 100: further locking structure
- 11: opening
- 110: locking structure
- 12: soilless medium
- 13: medium compartment
- 130: compartment wall
- 14: opening device
- 15: orifice area
- 16: side wall
- 17: upper wall
- 2: plant adaptor
- 20: plant opening
- 21: plant adaptor locking structure
- 22: peripheral structure
- 23: identification section
- 3: cover
- 31: cover locking structure
- 32: hood
- 33: side wall

## Claims

1. Plant transportation device comprising:
- a container (1) with a receptacle (10) and an opening (11) for positioning roots of a soilless living plant through the opening (11) into the receptacle (10), the receptacle (10) having a soilless medium (12) that is adapted to provide humidity and/ or nutrients to the roots of the soilless living plant,
**characterized in,**
**that** the opening (11) of the container (1) comprises a mechanically acting locking structure (110) arranged and adapted to create a mechanically fixed engagement between the container (1) and a plant adaptor (2) that matches the locking structure (110).

2. Plant transportation device according to claim 1, wherein the soilless medium (12) is selected from a group consisting of a gel, a liquid and a sponge-like structure.

3. Plant transportation device according to claim 1 or 2, wherein the soilless medium (12) is arranged inside the receptacle (10) in a separate medium compartment (13) separated from adjacent areas of the receptacle by a compartment wall (130).

4. Plant transportation device according to claim 3, wherein the container (1) comprises an opening device (14) that is adapted and arranged to penetrate and/ or to remove or to rip the compartment wall (130) when a plant adaptor (2) is mechanically fixed to the container (1) by the mechanically acting locking structure (110).

5. Plant transportation device according to one of the preceding claims, wherein the opening (11) with the mechanically acting locking structure (110) is the only orifice of the receptacle (10).

6. Plant transportation device according to one of claims 1 to 4, wherein adjacent to the opening (11) further orifice areas (15) are arranged at an upper end of the container (1) thus providing a closed container (1) apart from the opening (11).

7. Plant transportation device according to one of the preceding claims, wherein the opening (11) and its mechanically acting locking structure (110) are arranged at an upper end of the container (1), wherein the container (1) extends adjacently to the opening (11) and downwards from the opening (11) to form the receptacle (10).

8. Plant transportation device according to one of the preceding claims, wherein the mechanically acting locking structure (110) is arranged and adapted to provide a mechanical screwing and/ or clamping and/ or clip-lock-mechanism to create the mechanically fixed engagement between the container (1) and the plant adaptor (2).

9. Plant transportation device according to one of the preceding claims, wherein the container (1) comprises at its outer side a further mechanically acting locking structure (100) arranged and adapted to create a mechanically fixed engagement between the container (1) and a cover (3) that matches the further mechanically acting locking structure (100).

10. Kit of parts comprising a plant transportation device according to one of the preceding claims and a plant adaptor (2), wherein the plant adaptor (2) has a plant opening (20) being surrounded by a peripheral structure (22) that comprises a mechanically acting plant adaptor locking structure (21).

11. Kit of parts according to claim 10, wherein the peripheral structure (22) comprises at least one identification section (23) that shows an absorption coefficient for infrared light being at least 10times higher, preferably at least 50times higher and more preferably at least 100times higher compared to sections of the peripheral structure adjacent to the identification section (23).

12. Kit of parts according to claim 10, wherein the peripheral structure (22) comprises at least one identification section (23) that shows a reflection coefficient for infrared light being at least 100times higher, preferably at least 1.000times higher and more preferably at least 10.000times higher compared to sections of the peripheral structure adjacent to the identification section (23).

13. Kit of parts according to any of claims 10 to 12, wherein the peripheral structure (22) comprises at least one color identification section (23).

14. Kit of parts according any one of the claims 10 to 13, further comprising a cover (3), wherein the cover (3) forms a cup-shaped hood (32) that comprises a cover locking structure (31).

15. Kit of parts according to claim 14, wherein the cover (3) is transparent.
